(19) Europäisches Patentamt
European Patent Office
Office européen des brevets

(11) **EP 4 187 205 A2**

(12) **EUROPEAN PATENT APPLICATION**

(43) Date of publication:
**31.05.2023 Bulletin 2023/22**

(21) Application number: **23165032.6**

(22) Date of filing: **29.03.2023**

(51) International Patent Classification (IPC):
***G01C 21/34*** (2006.01)

(52) Cooperative Patent Classification (CPC):
**G01C 21/3438; G01C 21/343; G06Q 10/04;
G08G 1/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 CN 202210333954**

(71) Applicant: **Apollo Intelligent Connectivity (Beijing)
Technology Co., Ltd.
Beijing 100176 (CN)**

(72) Inventors:
• **GU, Hejin
BEIJING, 100176 (CN)**
• **WU, Junfa
BEIJING, 100176 (CN)**

(74) Representative: **Laqua, Bernd Christian Kurt
Wuesthoff & Wuesthoff
Patentanwälte PartG mbB
Schweigerstraße 2
81541 München (DE)**

(54) **NAVIGATING METHOD AND APPARATUS, AND MEDIUM**

(57)    A computer-implemented method is provided. The method includes: obtaining a location of a vehicle driver's terminal device, a location of a first passenger's terminal device and a location of a second passenger's terminal device and a location of a destination; determining a plurality of candidate pick-up points according to the locations of the first and second passenger's terminal devices; determining at least one target pick-up point from the plurality of candidate pick-up points, in such a manner that a total time cost from the location of the vehicle driver's terminal device to the location of the destination to be minimum when the first and second passenger's terminal devices are picked up from a respective target pick-up point in the at least one target pick-up point; and determining a navigation path for the vehicle driver's terminal device based on at least a location of the at least one target pick-up point.

Fig. 2

**Description**

**TECHNICAL FIELD**

The present disclosure relates to the technical field of computers, in particular to the technical field of intelligent cabins, Internet of vehicles and automatic driving, and particularly relates to a computer-implemented method, a navigating apparatus, a computer readable storage medium and a computer program product.

**BACKGROUND ART**

When traveling, users can use navigation software set on an intelligent terminal to navigate. The users can obtain a navigation route recommended by the navigation software by inputting a departure location and a desired destination location in the navigation software. In an application scenario where multiple people travel together by car, there is a need to further optimize the navigation route.

The method described in this section is not necessarily method that has been previously conceived or employed. Unless otherwise indicated, it should not be assumed that any method described in this section is considered as the prior art simply because it is included in this section. Similarly, unless otherwise indicated, problems raised in this section should not be considered to be recognized in any prior art.

**SUMMARY OF THE INVENTION**

The present disclosure provides a computer-implemented method, a navigating apparatus, a computer readable storage medium and a computer program product.

According to an aspect of the present disclosure, there is provided a computer-implemented method. The method includes: obtaining a location of a vehicle driver's terminal device, a location of a first passenger's terminal device and a location of a second passenger's terminal device and a location of a destination; determining a plurality of candidate pick-up points according to the location of the first passenger's terminal device and the location of the second passenger's terminal device; determining at least one target pick-up point from the plurality of candidate pick-up points, in such a manner that a total time cost from the location of the vehicle driver's terminal device to the location of the destination to be minimum when the first passenger's terminal device and the second passenger's terminal device are picked up from a respective target pick-up point in the at least one target pick-up point; and determining a first navigation path for the vehicle driver's terminal device based on at least a location of the at least one target pick-up point.

According to another aspect of the present disclosure, there is provided a navigating apparatus. The apparatus includes: an obtaining unit, configured to obtain a location of a vehicle driver's terminal device, a location of a first passenger's terminal device and a location of a second passenger's terminal device and a location of a destination; a first determining unit, configured to determine a plurality of candidate pick-up points according to the location of the first passenger's terminal device and the location of the second passenger's terminal device; a second determining unit, configured to determine at least one target pick-up point from the plurality of candidate pick-up points, in such a manner that a total time cost from the location of the vehicle driver's terminal device to the location of the destination to be minimum when the first passenger's terminal device and the second passenger's terminal device are picked up from a respective target pick-up point in the at least one target pick-up point; and a third determining unit, configured to determine a first navigation path for the vehicle driver's terminal device based on at least a location of the at least one target pick-up point.

According to an aspect of the present disclosure, a non-transitory computer readable storage medium storing computer instructions is provided, wherein the computer instructions are used for enabling a computer to execute the above method.

According to an aspect of the present disclosure, a computer program product is provided and includes a computer program, wherein the computer program, when executed by a processor, implements the above method.

It should be understood that the content described in this section is neither intended to identify key or important features of embodiments of the present disclosure, nor is it intended to limit the scope the present disclosure. Other features of the present disclosure will become easy to understand by the following specification.

**BRIEF DESCRIPTION OF THE DRAWINGS**

The accompanying drawings illustrate embodiments exemplarily and constitute a part of the specification, and together with the text description of the specification, serve to explain example implementations of the embodiments. The illustrated embodiments are for illustrative purposes only and do not limit the scope of the claims. Throughout the accompanying drawings, the same reference numbers refer to similar but not necessarily identical elements.

Fig. 1 illustrates a schematic diagram of an example system in which various methods described herein may be implemented according to an embodiment of the present disclosure.
Fig. 2 illustrates a flowchart of a navigating method according to an embodiment of the present disclosure.
Fig. 3 illustrates a flowchart of a part of an example process in the method of Fig. 2 according to an embodiment of the present disclosure.

Fig. 4 illustrates a flowchart of a part of an example process of the method of Fig. 2 according to an embodiment of the present disclosure.

Fig. 5 illustrates a flowchart of a navigating method according to an embodiment of the present disclosure.

Fig. 6 illustrates a diagram of a scene in which a navigating method according to an embodiment of the present disclosure may be implemented.

Fig. 7 illustrates a structural block diagram of a navigation apparatus according to an embodiment of the present disclosure.

Fig. 8 illustrates a structural block diagram of an example electronic device that can be used to implement embodiments of the present disclosure.

## DETAILED DESCRIPTION

The example embodiments of the present disclosure are described below in conjunction with the accompanying drawings, including various details of the embodiments of the present disclosure for ease of understanding, which should be considered as merely example. Therefore, those ordinarily skilled in the art should recognize that various changes and modifications can be made to the embodiments described herein without departing from the scope of the present disclosure. Similarly, for the sake of clarity and conciseness, the description of well-known functions and structures is omitted from the following description.

In the present disclosure, unless otherwise indicated, terms "first", "second" and the like are used to describe various elements, which are not intended to define the positional relationship, temporal relationship or importance relationship of these elements, but are only used to distinguish one element from another. In some examples, a first element and a second element may point to the same instance of the element, and in some cases, they can also refer to different instances based on the context description.

The terms used in the description of the various described examples in the present disclosure are only for the purpose of describing illustrative examples and are not intended to make a limitation. Unless otherwise indicated expressly in the context, if the number of elements is not intentionally limited, the element may be one or more. In addition, a term "and/or" used in the present disclosure covers any and all possible combinations of the listed terms.

As mentioned above, in an application scenario where multiple people travel together by car (for example, a scenario where multiple people at different locations need to travel by the same car), there is a need to further optimize a navigation route. In the scenario where multiple people travel together by car, a vehicle driver may need to pick up multiple passengers on multiple unfamiliar road sections and go to one or more destinations. Sometimes there may be multiple stops and pick-ups in the middle, which poses challenges for route selection, pick-up point selection and location information exchange.

In the related art, the vehicle driver and the multiple passengers can communicate via telephones or social software to determine their respective locations, and plan their respective paths, for example, by manually querying a map. However, the path provided by this method may not be the optimal solution, and there are many drawbacks. For example, the pick-up point may be too far away from the vehicle driver or some passengers, which takes too much time for the vehicle driver or some passengers to get to the pick-up point; and when the road condition information is uncertain, the planned pick-up point may be inconvenient for parking and so on.

The present disclosure provides a computer-implemented method. According to a location of a passenger's terminal device, a plurality of candidate pick-up points are determined, a total time cost that can represent the overall travel cost of the vehicle driver and a plurality of passengers is introduced, through a mode of minimizing the total time cost, at least one target pick-up point is determined from the plurality of candidate pick-up points, and a navigation path is determined for a vehicle driver's terminal device based on at least the at least one target pick-up point. Therefore, a location of the determined at least one target pick-up point enables the overall travel cost of the vehicle driver and the plurality of passengers to be optimized, the driver and the passengers may successfully complete the pick-up at the at least one target pick-up point, and the vehicle driver and the passengers do not need to communicate their respective locations for many times, so that user experience of the vehicle driver and the passengers is improved.

In the technical solution of the present disclosure, the collection, storage, usage, processing, transmission, provision and disclosure of the user's personal information involved are all in compliance with relevant laws and regulations, and do not violate public order and good customs.

The embodiments of the present disclosure will be described in detail below with reference to the accompanying drawings.

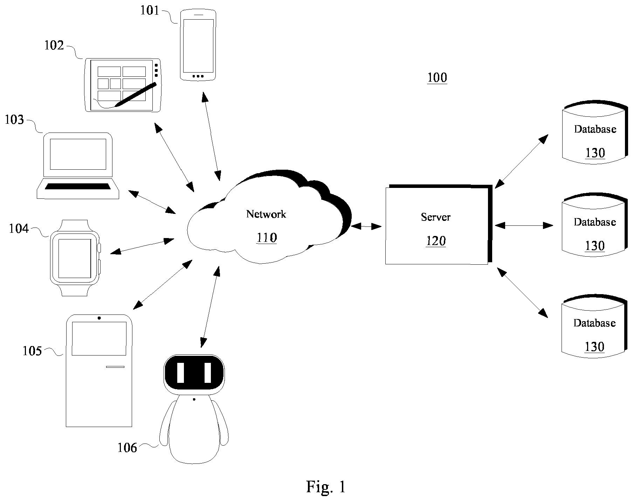

Fig. 1 illustrates a schematic diagram of an example system 100 in which various methods and apparatuses described herein may be implemented according to an embodiment of the present disclosure. Referring to Fig. 1, the system 100 includes one or more client devices 101, 102, 103, 104, 105 and 106, a server 120 and one or more communication networks 110 coupling the one or more client devices to the server 120. The client devices 101, 102, 103, 104, 105 and 106 may be configured to execute one or more application programs.

In the embodiment of the present disclosure, the server 120 may run one or more services or software applications enabled to execute the navigating method.

In some embodiments, the server 120 may further provide other services or software applications that may include a non-virtual environment and a virtual environment. In some embodiments, these services may be provided as web-based services or cloud services, for example, provided to users of the client devices 101, 102, 103, 104, 105 and/or 106 under a software-as-a-service (SaaS) model.

In the configuration shown in Fig. 1, the server 120 may include one or more components that implement functions executed by the server 120. These components may include a software component, a hardware component or a combination thereof that may be executed by one or more processors. The users operating the client devices 101, 102, 103, 104, 105 and/or 106 may sequentially use one or more client application programs to interact with the server 120, so as to use the services provided by these components. It should be understood that a variety of different system configurations are possible, which may differ from the system 100. Therefore, Fig. 1 is an example of a system for implementing the various methods described herein, and is not intended to make a limitation.

The user may use the client devices 101, 102, 103, 104, 105 and/or 106 to determine a current location of the user, upload the current location of the user and a location of a destination, obtain a target pick-up point or a navigation path to reach the target pick-up point, check a current location of the vehicle driver's terminal device and so on. The client devices may provide interfaces that enable users of the client devices to interact with the client devices. The client devices may further output information to the users via the interfaces. Although Fig. 1 depicts only six client devices, those skilled in the art will appreciate that the present disclosure may support any number of client devices.

The client devices 101, 102, 103, 104, 105 and/or 106 may include various types of computer devices, such as a portable handheld device, a general-purpose computer (such as a personal computer and a laptop computer), a workstation computer, a wearable device, a smart screen device, a self-service terminal device, a service robot, a gaming system, a thin client, various messaging devices, a sensor or other sensing devices. These computer devices may run various types and versions of software application programs and operating systems, such as MICROSOFT Windows, APPLE iOS, UNIX-like operating systems, Linux or Linux-like operating systems (such as GOOGLE Chrome OS); or include various mobile operating systems, such as MICROSOFT Windows Mobile OS, iOS, Windows Phone and Android. The portable handheld device may include a cellular phone, a smart phone, a tablet computer, a personal digital assistant (PDA) and the like. The wearable device may include a head-mounted display (such as smart glasses) and other devices. The gaming system may include various handheld gaming devices, an Internet-enabled gaming device and the like. The client devices can execute a variety of different application programs, such as various Internet-related application programs, communication application programs (such as e-mail application programs), and short message service (SMS) application programs, and may use various communication protocols.

The network 110 may be any type of network known to those skilled in the art that may support data communication using any of a variety of available protocols (including but not limited to TCP/IP, SNA, IPX and the like). As an example only, one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (such as Bluetooth and WIFI), and/or any combination of these and/or other networks.

The server 120 may include one or more general-purpose computers, a dedicated server computer (such as a personal computer (PC) server, a UNIX server and a midrange server), a blade server, a mainframe computer, a server cluster or any other suitable arrangement and/or combination. The server 120 may include one or more virtual machines running a virtual operating system, or other computing architectures involving virtualization (such as one or more flexible pools of logical storage devices that may be virtualized to maintain virtual storage devices of the server). In various embodiments, the server 120 may run one or more services or software applications that provide the functions described below.

A computing unit in the server 120 may run one or more operating systems including any of the operating systems described above and any commercially available server operating system. The server 120 may further run any of various additional server application programs and/or middle-tier application programs, including HTTP servers, FTP servers, CGI servers, JAVA servers, database servers and the like.

In some implementations, the server 120 may include one or more application programs, so as to analyze and consolidate data feeds and/or event updates received from the users of the client devices 101, 102, 103, 104, 105 and/or 106. The server 120 may further include one or more application programs, so as to display data feeds and/or real-time events via one or more display devices of the client devices 101, 102, 103, 104, 105 and/or 106.

In some implementations, the server 120 may be a server of a distributed system, or a server combined with a blockchain. The server 120 may also be a cloud server, or a smart cloud computing server or smart cloud host with an artificial intelligent technology. The cloud server is a host product in the cloud computing service system, so as to solve the defects of highly difficult management and weak business expansion in a traditional physical host and virtual private server (VPS) services.

The system 100 may further include one or more databases 130. In some embodiments, these databases may be configured to store data and other information. For example, one or more of the databases 130 may be configured to store information such as audio files and video files. The databases 130 may reside in various locations. For example, the database used by the server 120 may be local to the server 120, or may be remote from the server 120 and communicate with the server 120 via a network-based or dedicated connection. The databases 130 may be of different types. In some embodiments, the database used by the server 120 may be, for example, a relational database. One or more of these databases may store, update and retrieve data to and from the databases in response to commands.

In some embodiments, one or more of the databases 130 may further be used by the application programs to store application program data. The databases used by the application programs may be different types of databases, such as key-value repositories, object repositories or general repositories supported by file systems.

The system 100 of Fig. 1 may be configured and operated in various ways to enable the various methods and apparatuses described according to the present disclosure to be applied.

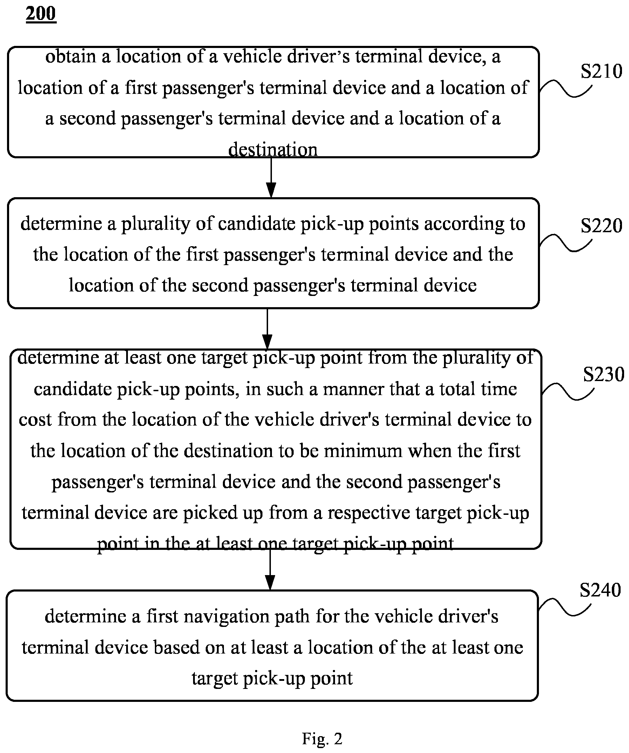

Fig. 2 illustrates a flowchart of a navigating method 200 according to an embodiment of the present disclosure. The method 200 includes:

> step S210, obtain a location of a vehicle driver's terminal device, a location of a first passenger's terminal device and a location of a second passenger's terminal device and a location of a destination;
> step S220, determine a plurality of candidate pick-up points according to the location of the first passenger's terminal device and the location of the second passenger's terminal device;
> step S230, determine at least one target pick-up point from the plurality of candidate pick-up points, in such a manner that a total time cost from the location of the vehicle driver's terminal device to the location of the destination to be minimum when the first passenger's terminal device and the second passenger's terminal device are picked up from a respective target pick-up point in the at least one target pick-up point; and
> step S240, determine a first navigation path for the vehicle driver's terminal device based on at least a location of the at least one target pick-up point.

Therefore, by determining the plurality of candidate pick-up points according to the location of a passenger's terminal device, the total time cost that can represent overall travel cost of a vehicle driver and a plurality of passengers is introduced, through a mode of minimizing the total time cost, at least one target pick-up point is determined from the plurality of candidate pick-up points, and the navigation path is determined for the vehicle driver's terminal device based on at least the at least one target pick-up point. Therefore, a location of the determined at least one target pick-up point enables the overall travel cost of the vehicle driver and the plurality of passengers to be optimized, and the driver and the passengers may successfully complete the pick-up at the at least one target pick-up point, so that user experience of the vehicle driver and the passengers is improved.

The vehicle driver's terminal device may be a mobile device (such as a smart phone, a smart watch, a tablet computer and the like) used by the vehicle driver, or a vehicle-mounted device (such as a vehicle-mounted central control screen, a vehicle head-up display and the like).

The passenger's terminal device may be a mobile device (such as a smart phone, a smart watch, a tablet computer and the like) used by the passenger.

According to some embodiments, a distance between a location of each of the plurality of candidate pick-up points determined in step S220 and the location of the first passenger's terminal device may be smaller than a first threshold, and a distance between the location of each of the plurality of candidate pick-up points and the location of the second passenger's terminal device may be smaller than the first threshold.

Since the determined distances between the location of each candidate pick-up point and the locations of the first passenger's terminal device and the second passenger's terminal device are smaller than the first threshold, so that time costs of a first passenger and a second passenger to each candidate pick-up point are both within an acceptable range of the corresponding passengers, thus further optimizing costs of the first passenger and the second passenger to travel by car.

It should be understood that different first thresholds may be set according to an actual situation of a city map. For example, the first threshold may be 500 meters or 1000 meters, which will not be repeated here.

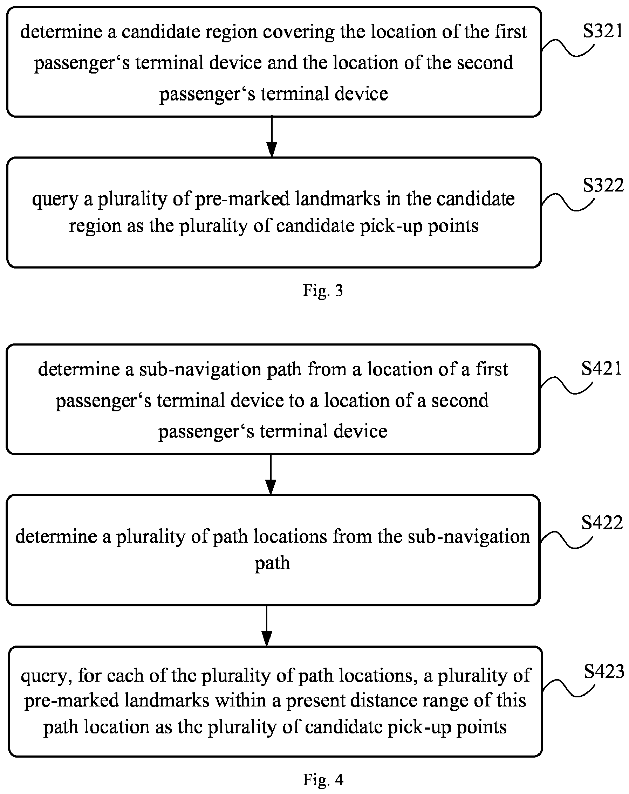

Fig. 3 illustrates a flowchart of a part of an example process in the method 200 of Fig. 2 according to an embodiment of the present disclosure. As shown in Fig. 3, according to some embodiments, step S220 above may include:

> step S321, determine a candidate region covering the location of the first passenger's terminal device and the location of the second passenger's terminal device; and
> step S322, query a plurality of pre-marked landmarks in the candidate region as the plurality of candidate pick-up points.
> In step S321, the region may be a circular region with the smallest area that can cover the locations of the first passenger's terminal device and the second passenger's terminal device.

By querying the plurality of pre-marked landmarks (such as a plurality of pre-marked buildings, stations and the like in the map) in the candidate region, since the plurality of landmarks are pre-marked, the vehicle driver or passengers can easily find the landmarks in the navigation map or in the real world, so that they can quickly and easily reach the pick-up point. In addition, since the plurality of landmarks are located in the candidate region (for example, less than 500 meters from a location of each passenger), and the time costs of the passengers to go to each landmark is within the acceptable range of the corresponding passengers.

Fig. 4 illustrates a flowchart of a part of an example process of the method of Fig. 2 according to an embodiment of the present disclosure. As shown in Fig. 4, according to some embodiments, step S220 above may include:

> step S421, determine a sub-navigation path from the location of the first passenger's terminal device to the location of the second passenger's terminal device;
> step S422, determine a plurality of path locations from the sub-navigation path; and
> step S423, query, for each of the plurality of path locations, a plurality of pre-marked landmarks within a preset distance range of this path location as the plurality of candidate pick-up points.

In step S421, the determined sub-navigation path may be, for example, a walkable path in the map from the location of the first passenger's terminal device to the location of the second passenger's terminal device. In some examples, some locations in the sub-navigation path may be farther than a certain distance (such as 500 meters) from the location of the first passenger's terminal device or from the location of the second passenger's terminal device, but these locations in the sub-navigation path may be convenient for the vehicle driver to find and to park.

Therefore, by querying the plurality of pre-marked landmarks (such as the plurality of pre-marked buildings, stations and the like in the map) around a plurality of path locations in the sub-navigation path, since the plurality of landmarks are pre-marked, the vehicle driver or the passengers can easily find the landmarks in the navigation map or in the real world, so that they can quickly and easily reach the pick-up point and board.

According to some embodiments, a distance between the location of the first passenger's terminal device and the location of the second passenger's terminal device may be smaller than a second threshold.

It can be seen that, on the one hand, when the distance between the location of the first passenger's terminal device and the location of the second passenger's terminal device is smaller than the second threshold (such as 1 kilometer), the method described above is performed on the first passenger's terminal device and the second passenger's terminal device, so as to provide them with a target pick-up point. That is, the vehicle driver and the passengers may gather at the target pick-up point. On the other hand, when the distance between the location of the first passenger's terminal device and the location of the second passenger's terminal device is greater than the second threshold, the plurality of candidate pick-up points and at least one target pick-up point are not determined for the two passenger's terminal devices, but the vehicle driver picks up the two passengers respectively. Therefore, for passengers who are currently far away, it can avoid increasing too much time costs due to the need to go to the pick-up point, so that the overall travel cost can be further optimized, and the user experience of the passengers can be improved.

According to some embodiments, the second threshold may be a ratio of: the distance from the location of the first passenger's terminal device to the location of the second passenger's terminal device; and a navigation distance from the location of the vehicle driver's terminal device to the location of the destination.

Therefore, when the distance from the location of the first passenger's terminal device to the location of the second passenger's terminal device is relatively small relative to a distance of an entire journey (namely, the navigation distance from the location of the vehicle driver's terminal device to the location of the destination), the target pick-up point may be provided to the two passenger's terminal devices; on the contrary, the target pick-up point is not provided to the two passenger's terminal devices. For example, when the distance of the entire journey is 5 kilometers, and the distance from the location of the first passenger's terminal device to the location of the second passenger's terminal device is 1 kilometer, the vehicle driver may pick up the two passengers respectively; and when the distance of the entire journey is 5 kilometers, and the distance from the location of the first passenger's terminal device to the location of the second passenger's terminal device is 500 meters, the target pick-up point may be provided to the two passengers, and the vehicle driver picks up the two passengers at the target pick-up point. Therefore, the flexible choice of whether to provide the target pick-up point for the passengers according to the distance of the entire journey can further optimize the overall travel cost of the vehicle driver and the plurality of passengers, so that the user experience of the vehicle driver and the passengers is further improved.

According to some embodiments, the above total time cost may include a vehicle driver sub-cost and a passenger sub-cost. In addition, for each of the plurality of candidate pick-up points: the vehicle driver sub-cost is determined based on the location of the vehicle driver's terminal device, the location of the destination and location of the candidate pick-up point, and the passenger sub-cost is determined based on the locations of the first passenger's terminal device and the second passenger's terminal device and the location of the candidate pick-up point.

The vehicle driver sub-cost and the passenger sub-cost in the total time cost are considered separately, wherein the locations of the candidate pick-up points can affect the above two sub-costs respectively. Therefore, when minimizing the total time cost, we can understand the impact of selecting different candidate pick-up points on the driver and the passengers respectively.

According to some embodiments, the vehicle driver sub-cost may be a difference between: a navigation distance from the location of the vehicle driver's terminal device to the location of the destination via the location of the candidate pick-up point, and a reference navigation distance from the location of the vehicle driver's terminal device to the location of the destination. In addition, the passenger sub-cost may be a sum of a navigation distance from the location of the first passenger's terminal device to the location of the candidate pick-up point and a navigation distance from the location of the second passenger's terminal device to the location of the candidate pick-up point.

The reference navigation distance from the location of the vehicle driver's terminal device to the location of the destination refers to a navigation distance directly from the location of the vehicle driver's terminal device to the location of the destination without passing another pick-up point.

The extra distance traveled by the vehicle driver relative to the reference navigation distance in order to reach the target pick-up point is taken as the vehicle driver sub-cost; and the extra distance traveled by the passengers in order to reach the target pick-up point is taken as the passenger sub-cost. Since the above distances can be quickly obtained based on navigation data in the map, the time costs of the vehicle driver and the passengers can be simply and accurately calculated respectively, so that it is ensured that the calculation of the travel costs of the passengers and the driver is more accurate.

According to some embodiments, the total time cost may be determined by the following equation:

$$ K = \alpha \cdot K_d + \beta \cdot K_p + \gamma \cdot N $$

where $K$ is the total time cost, $K_d$ is the above vehicle driver sub-cost, $K_p$ is the above passenger sub-cost, $N$ is the number of the candidate pick-up points, $\alpha$ is a weight of the vehicle driver sub-cost, $\beta$ is a weight of the passenger sub-cost and $\gamma$ is a weight of the number of the pick-up points. Therefore, by setting corresponding weights for different parameters in the total time cost respectively, the weights may be adjusted more targeted for different road conditions or user conditions, so as to adjust the influence of the corresponding parameters on the total time cost. For example, in a scenario where the passengers are inconvenient to move, the total time cost may be optimized by increasing the passenger sub-cost weight $\beta$, for example, in a scenario where the road conditions around the pick-up point may be complicated, the influence of the number $N$ of the candidate pick-up points on the total time cost may be increased by increasing the number weight $\gamma$ of the pick-up point, so as to optimize the total time cost, so that the finally determined target pick-up point and the corresponding navigation path enable the total time cost of the driver and the passengers to be optimized.

It should be understood that although a plurality of possible examples of the total time cost are given above, more examples of the total time cost are also possible. For example, the total time cost may be in positive correlation to the square of the values of the plurality of above sub-costs; or the total time cost may be in positive correlation to the square of the number $N$ of the pick-up points. The parameters of the total time cost may be finely adjusted according to the urban road conditions or personal habits of users.

According to some embodiments, step S240, determine a navigation path for the vehicle driver's terminal device based on at least the location of the at least one target pick-up point may include: determine, for the vehicle driver's terminal device, the navigation path from the location of the vehicle driver's terminal device to the location of the destination via the location of the at least one target pick-up point.

After determining the target pick-up point, the corresponding navigation path is determined for the vehicle driver. Therefore, the vehicle driver does not need to perform manual navigation according to the target pick-up point, and for example, the vehicle driver may view the navigation path to the destination passing through the target pick-up point on the vehicle driver's terminal device, which saves time of the vehicle driver, and the driving risk caused by frequency viewing or operating the vehicle driver's terminal device to query the route during driving can also be avoided.

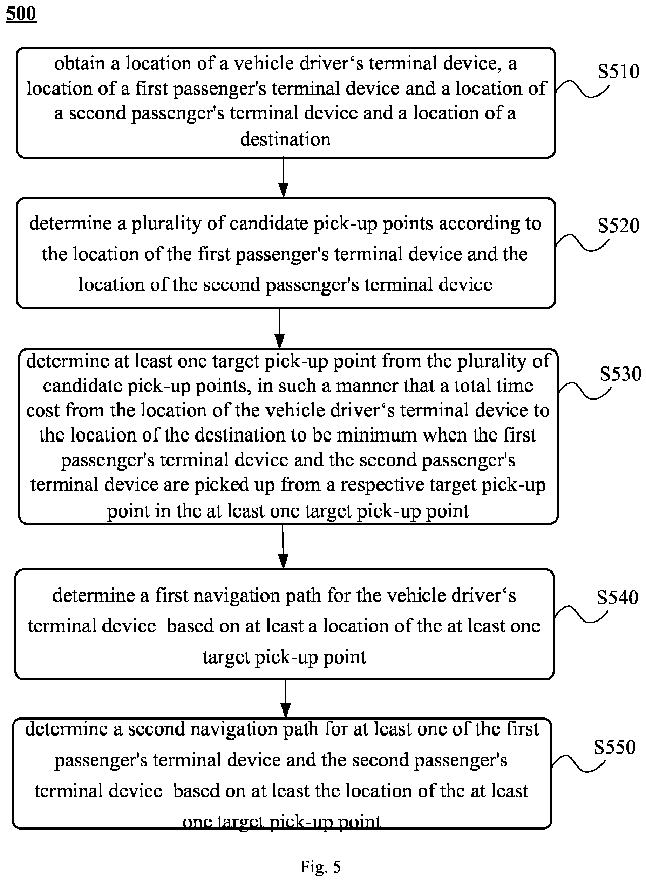

Fig. 5 illustrates a flowchart of a navigating method 500 according to an embodiment of the present disclosure. As shown in Fig. 5, the method 500 includes step S510 to step S550, wherein step S510 to step S540 are similar to step S210 to step S240 described above with respect to the method 200, which will not be repeated here for brevity.

In step S550, a second navigation path may further be determined for at least one of the first passenger's terminal device and the second passenger's terminal device based on at least the location of the at least one target pick-up point. Therefore, the passengers may also view the navigation path to the target pick-up point on the corresponding passenger's terminal device and navigate accordingly, which improves convenience for the passengers.

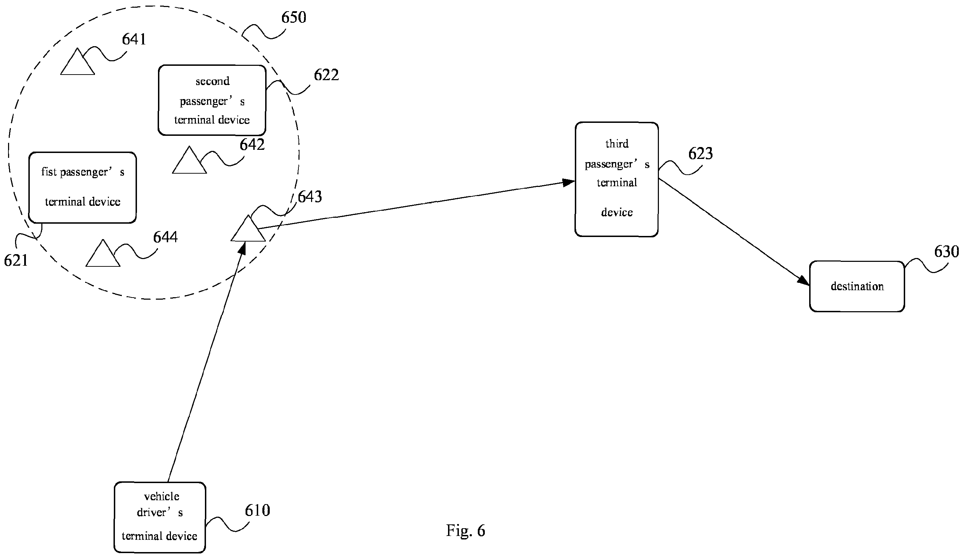

Below, the navigating method according to the embodiment of the present disclosure will be further described with reference to Fig. 6. Fig. 6 illustrates a diagram of a scene in which a navigating method according to an embodiment of the present disclosure may be implemented.

Fig. 6 illustrates a vehicle driver's terminal device 610, a first passenger's terminal device 621, a second passenger's terminal device 622, a third passenger's terminal device 623, and a destination 630.

It should be understood that although Fig. 6 illustrates only three passenger's terminal devices and one destination, the navigating method according to the embodiment of the present disclosure is still applicable when there are more passenger's terminal devices or more destinations.

Firstly, a location of the vehicle driver's terminal device 610, locations of the plurality of passenger's terminal devices 621, 622 and 623 and a location of the destination 630 may be obtained by a server.

Here, it is assumed that a distance between the locations of the first passenger's terminal device 621 and the second passenger's terminal device 622 is smaller than a second threshold (such as 1 kilometer), and distances between the location of the third passenger's terminal device 623 and the locations of the first passenger's terminal device 621 and the second passenger's terminal device 622 are greater than the second threshold. Therefore, for the first passenger's terminal device 621 and the second passenger's terminal device 622, a plurality of candidate pick-up points may be further provided to them, and since the third passenger's terminal device 623 is far from the first two, the third passenger's terminal device 623 may be picked up alone.

The plurality of candidate pick-up points 641, 642, 643 and 644 may be determined according to the locations of the first passenger's terminal device 621 and the second passenger's terminal device 622. In Fig. 6, the distance between the location of each candidate pick-up point in the plurality of candidate pick-up points and the location of the first passenger's terminal device 621 may be smaller than the first threshold (such as 100 meters), and the distance between the location of each candidate pick-up point in the plurality of candidate pick-up points and the location of the second passenger's terminal device 622 may also be smaller than the first threshold.

Here, a candidate region 650 covering the locations of the first passenger's terminal device 621 and the second passenger's terminal device 622 may be firstly determined; and then a plurality of pre-marked landmarks (such as pre-marked buildings in a map) are queried in the candidate region 650 as the plurality of candidate pick-up points 641, 642, 643 and 644. Of course, a sub-navigation path from the location of the first passenger's terminal device 621 to the location of the second passenger's terminal device 622 may also be firstly determined; then a plurality of path locations are determined from the sub-navigation path; and then the plurality of pre-marked landmarks are queried within a preset distance range of each path location in the plurality of path locations as the plurality of candidate pick-up points 641, 642, 643 and 644.

Then, at least one target pick-up point may be determined from the plurality of candidate pick-up points 641, 642, 643 and 644 by minimizing the total time cost. For example, the additional time cost (the consumed distance compared with direct driving to the destination 630) required by the vehicle driver to pass through each candidate pick-up point is calculated, the additional time costs required by the first passenger's terminal device 621 and the second passenger's terminal device 622 to reach each candidate pick-up point respectively are calculated, and the time costs required by the first passenger's terminal device 621 and the second passenger's terminal device 622 to go to one candidate pick-up point together or go to two candidate pick-up points respectively are calculated (for example, a product of the number of the candidate pick-up points and the corresponding weights is calculated), and then a sum of the above costs is minimized, so that at least one target pick-up point that enables the total time cost to be minimum may be determined from the plurality of candidate pick-up points.

For example, the candidate pick-up point 643 may be determined as the target pick-up point. Therefore, for example, as simply illustrated by an arrow in Fig. 6, the navigation path may be determined for the vehicle driver's terminal device 610 based on the location of the target pick-up point. It should be understood that, in some scenarios (for example, it is difficult for the passengers to go to the candidate pick-up point 643), it is also possible that both of the two candidate pick-up points 642 and 644 are determined as the target pick-up points.

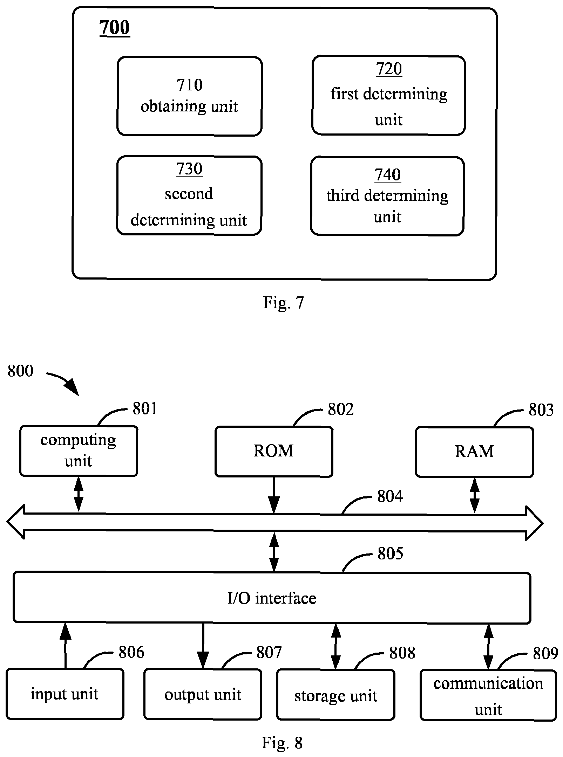

According to an aspect of the present disclosure, a navigation apparatus 700 is further provided. Fig. 7 illustrates a structural block diagram of a navigation apparatus 700 according to an embodiment of the present disclosure. As shown in Fig. 7, the navigation apparatus 700 includes:

an obtaining unit 710, configured to obtain a location of a vehicle driver's terminal device, a location of a first passenger's terminal device and a location of a second passenger's terminal device and a location of a destination;

a first determining unit 720, configured to determine a plurality of candidate pick-up points according to the location of the first passenger's terminal device and the location of the second passenger's terminal device;

a second determining unit 730, configured to determine at least one target pick-up point from the plurality of candidate pick-up points, in such a manner that a total time cost from the location of the vehicle driver's terminal device to the location of the destination to be minimum when the first passenger's terminal device and the second passenger's terminal device are picked up from a respective target pick-up point in the at least one target pick-up point; and

a third determining unit 740, configured to determine a navigation path for the vehicle driver's terminal device based on at least a location of the at least one target pick-up point.

According to some embodiments, a distance between a location of each candidate pick-up point in the plurality of candidate pick-up points and the location of the first passenger's terminal device may be smaller than a first threshold, and a distance between the location of each candidate pick-up point in the plurality of candidate pick-up points and the location of the second passenger's terminal device may be smaller than the first threshold.

According to some embodiments, the first determining unit 720 may be further configured to: determine a candidate region covering the location of the first passenger's terminal device and the location of the second passenger's terminal device; and query a plurality of pre-marked landmarks in the candidate region as the plurality of candidate pick-up points.

According to some embodiments, the first determining unit 720 may be further configured to: determine a sub-navigation path from the location of the first passenger's terminal device to the location of the second passenger's terminal device; determine a plurality of path locations from the sub-navigation path; and query, for each of the plurality of path locations, a plurality of pre-marked landmarks within a preset distance range of this path location as the plurality of candidate pick-up points.

According to some embodiments, a distance between the location of the first passenger's terminal device and the location of the second passenger's terminal device may be smaller than a second threshold.

According to some embodiments, the total time cost may include a vehicle driver sub-cost and a passenger sub-cost. In addition, for each of the plurality of candidate pick-up points: the vehicle driver sub-cost is determined based on the location of the vehicle driver's terminal device, the location of the destination and locations of the candidate pick-up points, and the passenger sub-cost is determined based on the locations of the first passenger's terminal device and the second passenger's terminal device and locations of the candidate pick-up points.

According to another aspect of the present disclosure, an electronic device is further provided and includes: at least one processor; and a memory in communication connection with the at least one processor, wherein the memory stores instructions that can be executed by the at least one processor, and the instructions are executed by the at least one processor, such that the at least one processor can execute the above method.

According to another aspect of the present disclosure, a non-transitory computer readable storage medium storing computer instructions is further provided, wherein the computer instructions are used for enabling a computer to execute the above method.

According to another aspect of the present disclosure, a computer program product is further provided and includes a computer program, wherein the computer program, when executed by a processor, implements the above method.

Fig. 8 illustrates a structural block diagram of an example electronic device 800 that can be used to implement embodiments of the present disclosure.

Referring to Fig. 8, a structural block diagram of an electronic device 800 that may serve as a server or a client of the present disclosure will now be described, which is an example of a hardware device that may be applied to various aspects of the present disclosure. The electronic device is intended to represent various forms of digital electronic computer devices, such as a laptop computer, a desktop computer, a workstation, a personal digital assistant, a server, a blade server, a mainframe computer and other suitable computers. The electronic device may further represent various forms of mobile apparatuses, such as a personal digital processor, a cellular phone, a smart phone, a wearable device and other similar computing apparatuses. The components shown herein, their connections and relationships, and their functions are only examples, and are not intended to limit implementations of the present disclosure described and/or claimed herein.

As shown in Fig. 8, the device 800 includes a computing unit 801 that may execute various appropriate actions and processes according to a computer program stored in a read-only memory (ROM) 802 or loaded from a storage unit 808 to a random access memory (RAM) 803. The RAM 803 may further store various programs and data required by operation of the electronic device 800. The computing unit 801, the ROM 802 and the RAM 803 are connected with one another through a bus 804. An input/output (I/O) interface 805 is also connected to the bus 804.

A plurality of components in the electronic device 800 are connected to the I/O interface 805, including: an input unit 806, an output unit 807, the storage unit 808 and a communication unit 809. The input unit 806 may be any type of device capable of inputting information to the electronic device 800. The input unit 806 may receive input digital or character information and generate key signal input related to user setting and/or function control of the electronic device, and may include but not limited to a mouse, a keyboard, a touch screen, a trackpad, a trackball, a joystick, a microphone, and/or a remote controller. The output unit 807 may be any type of device capable of presenting information, and may include but not limited to a display, a speaker, a video/audio output terminal, a vibrator, and/or a printer. The storage unit 808 may include but not limited to a magnetic disk and an optical disk. The communication unit 809 allows the device 800 to exchange information/data with other devices via a computer network such as the Internet and/or various telecommunication networks, and may include but not limited to a modem, a network card, an infrared communication device, a wireless communication transceiver and/or a chip set, such as a Bluetooth™ device, an 802.11 device, a WiFi device, a WiMax device, a cellular communication device and/or the like.

The computing unit 801 may be various general-purpose and/or special-purpose processing components with processing and computing capabilities. Some examples of the computing unit 801 include but not limited to a central processing unit (CPU), a graphics processing unit (GPU), various dedicated artificial intelligence (AI) computing chips, various computing units that run machine learning model algorithms, a digital signal processor (DSP) and any appropriate processors, controllers, microcontrollers and the like. The computing unit 801 executes various methods and processes described above, such as the method 200 or the method 500. For example, in some embodiments, the method 200 or the method 500 may be implemented as a computer software program, which is tangibly contained in a machine-readable medium, such as the storage unit 808. In some embodiments, some or all of the computer programs may be loaded and/or installed on the device 800 via the ROM 802 and/or the communication unit 809. When the computer programs are loaded on the RAM 803 and executed by the computing unit 801, one or more steps in the method 200 or the method 500 described above may be executed. Alternatively, in other embodiments, the computing unit 801 may be configured to execute the method 200 or the method 500 by any other appropriate means (such as by means of firmware).

Various implementations of the systems and technologies described above in this paper may be implemented in a digital electronic circuit system, an integrated circuit system, a field programmable gate array (FPGA), an application specific integrated circuit (ASIC), an application specific standard part (ASSP), a system on chip (SOC), a complex programmable logic device (CPLD), computer hardware, firmware, software and/or their combinations. These various implementations may include: being implemented in one or more computer programs, wherein the one or more computer programs may be executed and/or interpreted on a programmable system including at least one programmable processor, and the programmable processor may be a special-purpose or general-purpose programmable processor, and may receive data and instructions from a storage system, at least one input apparatus, and at least one output apparatus, and transmit the data and the instructions to the storage system, the at least one input apparatus, and the at least one output apparatus.

Program codes for implementing the methods of the present disclosure may be written in any combination of one or more programming languages. These program codes may be provided to processors or controllers of a general-purpose computer, a special-purpose computer or other programmable data processing apparatuses, so that when executed by the processors or controllers, the program codes enable the functions/operations specified in the flow diagrams and/or block diagrams to be implemented. The program codes may be executed completely on a machine, partially on the machine, partially on the machine and partially on a remote machine as a separate software package, or completely on the remote machine or server.

In the context of the present disclosure, a machine readable medium may be a tangible medium that may contain or store a program for use by or in connection with an instruction execution system, apparatus or device. The machine readable medium may be a machine readable signal medium or a machine readable storage medium. The machine readable medium may include but not limited to an electronic, magnetic, optical, electromagnetic, infrared, or semiconductor system, apparatus or device, or any suitable combination of the above contents. More specific examples of the machine readable storage medium will include electrical connections based on one or more lines, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above contents.

In order to provide interactions with users, the systems and techniques described herein may be implemented on a computer, and the computer has: a display apparatus for displaying information to the users (e.g., a CRT (cathode ray tube) or LCD (liquid crystal display) monitor); and a keyboard and a pointing device (e.g., a mouse or trackball), through which the users may provide input to the computer. Other types of apparatuses may further be used to provide interactions with users; for example, feedback provided to the users may be any form of sensory feedback (e.g., visual feedback, auditory feedback, or tactile feedback); an input from the users may be received in any form (including acoustic input, voice input or tactile input).

The systems and techniques described herein may be implemented in a computing system including background components (e.g., as a data server), or a computing system including middleware components (e.g., an application server) or a computing system including front-end components (e.g., a user computer with a graphical user interface or a web browser through which a user may interact with the implementations of the systems and technologies described herein), or a computing system including any combination of such background components, middleware components, or front-end components. The components of the system may be interconnected by digital data communication (e.g., a communication network) in any form or medium. Examples of the communication network include: a local area network (LAN), a wide area network (WAN) and the Internet.

A computer system may include a client and a server. The client and the server are generally far away from each other and usually interact through a communication network. A relationship of the client and the server is generated by computer programs running on the corresponding computers and having a client-server relationship to each other. The server may be a cloud server, or a server of a distributed system, or a server combined with a blockchain.

It should be understood that steps may be reordered, added or deleted using the various forms of flows shown above. For example, the steps recorded in the present disclosure may be performed in parallel, or in sequence or in a different order, which is not limited herein as long as the desired results of the technical solution disclosed in the present disclosure can be achieved.

Although the embodiments or examples of the present disclosure have been described with reference to the accompanying drawings, it should be understood that the above method, system and device are only example embodiments or examples, and the scope of the present disclosure is not limited by these embodiments or examples, but is limited only by the scope of the authorized claims and their equivalents. Various elements of the embodiments or examples may be omitted or replaced by equivalent elements thereof. Furthermore, all the steps may be executed in an order different from that described in the present disclosure. Further, various elements of the embodiments or examples may be combined in various ways. Importantly, as technology evolves, many elements described herein may be replaced by equivalent elements that appear after the present disclosure.

**Claims**

1. A computer-implemented method, comprising:

   Obtaining (S210) a location of a vehicle driver's terminal device, a location of a first passenger's terminal device and a location of a second passenger's terminal device and a location of a destination;
   determining (S220) a plurality of candidate pick-up points according to the location of the first passenger's terminal device and the location of the second passenger's terminal device;
   determining (S230) at least one target pick-up point from the plurality of candidate pick-up points, in such a manner that a total time cost from the location of the vehicle driver's terminal device to the location of the destination to be minimum when the first passenger's terminal device and the second passenger's terminal device are picked up from a respective target pick-up point in the at least one target pick-up point; and
   determining (S240) a first navigation path for the vehicle driver's terminal device based on at least a location of the at least one target pick-up point.

2. The method according to claim 1, wherein a distance between a location of each of the plurality of candidate pick-up points and the location of the first passenger's terminal device is smaller than a first threshold, and a distance between the location of each of the plurality of candidate pick-up points and the location of the second passenger's terminal device is smaller than the first threshold.

3. The method according to claim 2, wherein the determining the plurality of candidate pick-up points according to the location of the first passenger's terminal device and the location of the second passenger's terminal device comprises:

   determining a candidate region covering the location of the first passenger's terminal device and the location of the second passenger's terminal device; and
   querying a plurality of pre-marked landmarks in the candidate region as the plurality of candidate pick-up points.

4. The method according to claim 2, wherein the determining the plurality of candidate pick-up points according to the location of the first passenger's terminal device and the location of the second passenger's terminal device comprises:

   determining a sub-navigation path from the location of the first passenger's terminal device to the location of the second passenger's terminal device;
   determining a plurality of path locations from the sub-navigation path; and
   querying, for each of the plurality of path locations, a plurality of pre-marked landmarks within a preset distance range of this path location as the plurality of candidate pick-up points.

5. The method according to claim 1, wherein a distance between the location of the first passenger's terminal device and the location of the second passenger's terminal device is smaller than a second threshold.

6. The method according to claim 5, wherein the second threshold is a ratio of

   the distance from the location of the first passenger's terminal device to the location of the second passenger's terminal device and
   a navigation distance from the location of the vehicle driver's terminal device to the location of the destination.

7. The method according to any one of claims 1 to 6, wherein the total time cost comprises a vehicle driver sub-cost and a passenger sub-cost; and
for each of the plurality of candidate pick-up points:

the vehicle driver sub-cost is determined based on the location of the vehicle driver's terminal device, the location of the destination and a location of the candidate pick-up point, and

the passenger sub-cost is determined based on the locations of the first passenger's terminal device and the second passenger's terminal device and a location of the candidate pick-up point.

8. The method according to claim 7, wherein the vehicle driver sub-cost is a difference between

a navigation distance from the location of the vehicle driver's terminal device to the location of the destination via the location of the candidate pick-up point and a reference navigation distance from the location of the vehicle driver's terminal device to the location of the destination; and

wherein the passenger sub-cost is a sum of a navigation distance from the location of the first passenger's terminal device to the location of the candidate pick-up point and a navigation distance from the location of the second passenger's terminal device to the location of the candidate pick-up point.

9. The method according to claim 7, wherein the total time cost is determined by the following equation:

$$K = \alpha \cdot K_d + \beta \cdot K_p + \gamma \cdot N$$

wherein $K$ is the total time cost, $K_d$ is the vehicle driver sub-cost, $K_p$ is the passenger sub-cost, $N$ is the number of the candidate pick-up points, $\alpha$ is a weight of the vehicle driver sub-cost, $\beta$ is a weight of the passenger sub-cost and $\gamma$ is a weight of the number of the pick-up points.

10. The method according to any one of claims 1 to 6, wherein the determining the first navigation path for the vehicle driver's terminal device based on at least the location of the at least one target pick-up point comprises:

determining, for the vehicle driver's terminal device, the first navigation path from the location of the vehicle driver's terminal device to the location of the destination via the location of the at least one target pick-up point.

11. The method according to any one of claims 1 to 6, further comprising:

determining a second navigation path for at least one of the first passenger's terminal device and the second passenger's terminal device based on at least the location of the at least one target pick-up point.

12. A navigating apparatus, comprising:

an obtaining unit (710), configured to obtain a location of a vehicle driver's terminal device, a location of a first passenger's terminal device and a location of a second passenger's terminal device and a location of a destination;

a first determining unit (720), configured to determine a plurality of candidate pick-up points according to the location of the first passenger's terminal device and the location of the second passenger's terminal device;

a second determining unit (730), configured to determine at least one target pick-up point from the plurality of candidate pick-up points, in such a manner that a total time cost from the location of the vehicle driver's terminal device to the location of the destination to be minimum when the first passenger's terminal device and the second passenger's terminal device are picked up from a respective target pick-up point in the at least one target pick-up point; and

a third determining unit (740), configured to determine a first navigation path for the vehicle driver's terminal device based on at least a location of the at least one target pick-up point.

13. A non-transitory computer readable storage medium storing computer instructions, wherein the computer instructions are used for enabling a computer to execute the method according to any one of claims 1-11.

14. A computer program product, comprising a computer program, wherein the computer program, when executed by a processor, implements the method according to any one of claims 1-11.

EP 4 187 205 A2

Fig. 1

<u>**200**</u>

obtain a location of a vehicle driver's terminal device, a location of a first passenger's terminal device and a location of a second passenger's terminal device and a location of a destination — S210

determine a plurality of candidate pick-up points according to the location of the first passenger's terminal device and the location of the second passenger's terminal device — S220

determine at least one target pick-up point from the plurality of candidate pick-up points, in such a manner that a total time cost from the location of the vehicle driver's terminal device to the location of the destination to be minimum when the first passenger's terminal device and the second passenger's terminal device are picked up from a respective target pick-up point in the at least one target pick-up point — S230

determine a first navigation path for the vehicle driver's terminal device based on at least a location of the at least one target pick-up point — S240

Fig. 2

determine a candidate region covering the location of the first passenger's terminal device and the location of the second passenger's terminal device — S321

query a plurality of pre-marked landmarks in the candidate region as the plurality of candidate pick-up points — S322

Fig. 3

determine a sub-navigation path from a location of a first passenger's terminal device to a location of a second passenger's terminal device — S421

determine a plurality of path locations from the sub-navigation path — S422

query, for each of the plurality of path locations, a plurality of pre-marked landmarks within a present distance range of this path location as the plurality of candidate pick-up points — S423

Fig. 4

<u>500</u>

obtain a location of a vehicle driver's terminal device, a location of a first passenger's terminal device and a location of a second passenger's terminal device and a location of a destination ⟶ S510

determine a plurality of candidate pick-up points according to the location of the first passenger's terminal device and the location of the second passenger's terminal device ⟶ S520

determine at least one target pick-up point from the plurality of candidate pick-up points, in such a manner that a total time cost from the location of the vehicle driver's terminal device to the location of the destination to be minimum when the first passenger's terminal device and the second passenger's terminal device are picked up from a respective target pick-up point in the at least one target pick-up point ⟶ S530

determine a first navigation path for the vehicle driver's terminal device based on at least a location of the at least one target pick-up point ⟶ S540

determine a second navigation path for at least one of the first passenger's terminal device and the second passenger's terminal device based on at least the location of the at least one target pick-up point ⟶ S550

Fig. 5

630

destination

623

third passenger's terminal device

622

650

second passenger's terminal device

642

641

644

fist passenger's terminal device

621

643

610

vehicle driver's terminal device

Fig. 6

**700**

**710**
obtaining unit

**720**
first determining unit

**730**
second determining unit

**740**
third determining unit

Fig. 7

800

801
computing unit

802
ROM

803
RAM

804

805
I/O interface

806
input unit

807
output unit

808
storage unit

809
communication unit

Fig. 8